# EUROPEAN PATENT SPECIFICATION

(11) **EP 1 995 103 B1**
(45) Date of publication and mention of the grant of the patent: **28.04.2010**
(21) Application number: 08009286.9
(22) Date of filing: 20.05.2008
(51) Int. Cl.: B60K 11/00, B62D 25/08, F02M 35/06, F02M 35/16

(54) **Cooling module**
Kühlmodul
Module de refroidissement

(30) Priority: 23.05.2007 JP 2007136603
(43) Date of publication of application: 26.11.2008
(73) Proprietor: DENSO CORPORATION, Kariya-city, Aichi-pref. 448-8661 (JP); TOYOTA JIDOSHA KABUSHIKI KAISHA, Toyota-city Aichi-pref., 471-8571 (JP); Toyota Boshoku Corporation, Kariya City Aichi 448-8651 (JP)
(72) Inventor: Sasano, Norihisa, Kariya-city Aichi-pref., 448-8661 (JP); Maeda, Akihiro, Kariya-city Aichi-pref., 448-8661 (JP); Nakawatase, Akira, Toyota-city Aichi-pref.471-8571 (JP); Kanzaka, Ryuji, Toyota-city Aichi-pref.471-8571 (JP); Matsubara, Yuji, Toyota-city Aichi-pref.471-8571 (JP); Kimura, Shingo, Ikeda-shi Osaka, 5638651 (JP); Enomoto, Akira, Kariya-city Aichi.-pref., 448-8651 (JP); Tanaka, Kazuya, Kariya-city Aichi.-pref., 448-8651 (JP); Suzuki, Kouji, Kariya-city Aichi.-pref., 448-8651 (JP)
(74) Representative: Klingseisen, Franz

(56) References cited:
- EP-A- 0 995 895
- FR-A- 2 902 153
- JP-A- 10 238 825
- US-A- 5 649 587

## Description

The present invention relates to a cooling module to be mounted to a front part of a vehicle, as mentioned in the preamble of claim 1, which refers to JP 10 238 825 A.

For example, heat exchangers, such as a radiator and a condenser, and a blower for introducing air to the heat exchangers are mounted to a vehicle body through a front end panel. The front end panel is also known as a shroud panel, a carrier, a radiator support and the like. The front end panel is integrally formed with a fan shroud of the blower. The fan shroud is configured to support a fan of the blower and to form an air passage from the heat exchangers to the fan.

Japanese Unexamined Patent Application Publication No. 11-171041 describes a cooling module having a front end panel. In the described cooling module, the front end panel forms a closed space in its upper beam portion, and an air cleaner unit is housed in the closed space.

Japanese Unexamined Patent Application Publication No. 10-238825 describes an exterior unit for a fixed air conditioner. In the described exterior unit, an auxiliary case for supporting a fan is disposed to oppose a radiator and a condenser. The auxiliary case is formed with a fan shroud that has a substantially cylindrical shape for surrounding the fan. Further, a part of the fan shroud is shared with a side wall of an air cleaner. As such, the exterior unit is made compact.

In vehicles, it has been desired to reduce damage to a person, such as a pedestrian, in a case a vehicle collides with the person. To reduce damage or impact to a pedestrian in a collision, it is proposed to increase a clearance between an engine hood and a front end panel, that is, a free space above the front end panel within an engine compartment, thereby easing deformation of the engine hood and the like.

In the cooling module described in Publication No. 11-171041, since the fan shroud and the air cleaner unit are arranged in an up and down direction of a vehicle, the size of the cooling module increases. Further, the weight of the cooling module increases. Also, since the air cleaner is disposed at the upper beam portion of the fan shroud, it will be difficult to sufficiently provide the free space above the front end panel.

In a case where the fan shroud described in Publication No. 10-238825 is employed to a cooling module for a vehicle, a size of the cooling module will be reduced and hence it will be easy to provide the free space above the cooling module. However, in a case where the air cleaner is disposed to oppose the heat exchangers, the air cleaner is heated by air that has passed through the heat exchangers. As a result, the temperature of intake air to be introduced into an engine through the air cleaner will be increased.

The present invention is made in view of the foregoing matter, and it is an object of the present invention to provide a cooling module having a structure capable of reducing the weight and increasing a space on its top in a condition mounted in an engine compartment of a vehicle while effectively cooling air to be introduced to an internal combustion engine.

According to an aspect of the present invention, a cooling module to be mounted to a front part of a vehicle includes a heat exchanger for performing heat exchange between air and a heat medium, a fan shroud, a blower and an air cleaner unit for filtering air to be introduced into an internal combustion engine of the vehicle. The fan shroud is disposed downstream of the heat exchanger with respect to a flow of air passing through the heat exchanger. The blower is held by the fan shroud. The fan shroud includes an air introducing portion defining an air passage from the heat exchanger to the blower. The air cleaner unit is disposed such that a front end of the air cleaner unit is offset from the heat exchanger with respect to a horizontal direction. The air cleaner unit has a side wall that partly forms the air introducing portion of the fan shroud. A clearance is provided between the side wall of the air cleaner unit and the heat exchanger such that air upstream of the heat exchanger is conducted toward a downstream position of the heat exchanger through the clearance.

Accordingly, the air cleaner unit is configured such that a part of the air cleaner unit serves as a part of the air introducing portion of the fan shroud. In other words, the air cleaner unit and the air introducing portion of the fan shroud share a wall between them. Therefore, the weight of the cooling module is reduced. Since the heat exchanger and the air cleaner unit are arranged in the horizontal direction, a space provided above the cooling module in a condition mounted in an engine compartment of the vehicle is increased. For example, the space is effectively used for a pedestrian protection system.

In addition, since the front end wall of the air cleaner unit is offset from the heat exchanger, when viewed along the flow of the air, that is, from the front side, the air cleaner unit is cooled by air that has not passed through the heat exchanger. As such, an increase in temperature of the air to be introduced into the engine is reduced. Further, since the clearance is provided between the side wall of the air cleaner unit and the heat exchanger, air is conducted from an upstream position of the heat exchanger toward a downstream position of the heat exchanger through the clearance. Therefore, the air cleaner unit is effectively cooled by the air passing through the clearance. As such, engine torque is increased while restricting the increase in temperature of the air to be introduced into the engine.

Accordingly, the cooling module having the structure capable of reducing the weight and increasing the space on its top in the condition mounted in the engine compartment while effectively cooling the air to be introduced into the engine is provided.

Other objects, features and advantages of the present invention will become more apparent from the following detailed description made with reference to the accompanying drawings, in which like parts are designated by like reference numbers and in which:
Fig. 1 is a perspective view of a cooling module, when viewed from a diagonally front side of a vehicle, according to a first embodiment of the present invention;
Fig. 2 is a perspective view of the cooling module, when viewed from a diagonally rear side of a vehicle, according to the first embodiment;
Fig. 3 is a cross-sectional view of the cooling module taken along a line lll-lll in Fig. 1;
Fig. 4 is a schematic rear view of the cooling module mounted on a vehicle, according to the first embodiment;
Fig. 5 is a graph showing a relationship between rotation speed of an engine and a sound level of intake air at an air suction port of an inlet duct of an air cleaner unit of the cooling module according to the first embodiment; and
Fig. 6 is a schematic rear view of a cooling module mounted on a vehicle, according to a second embodiment of the present invention.

### (First embodiment)

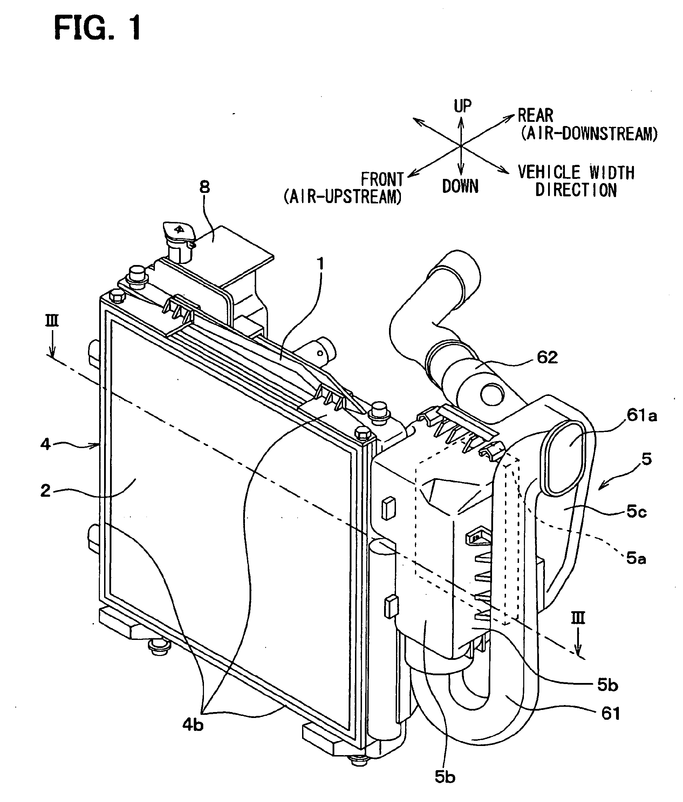

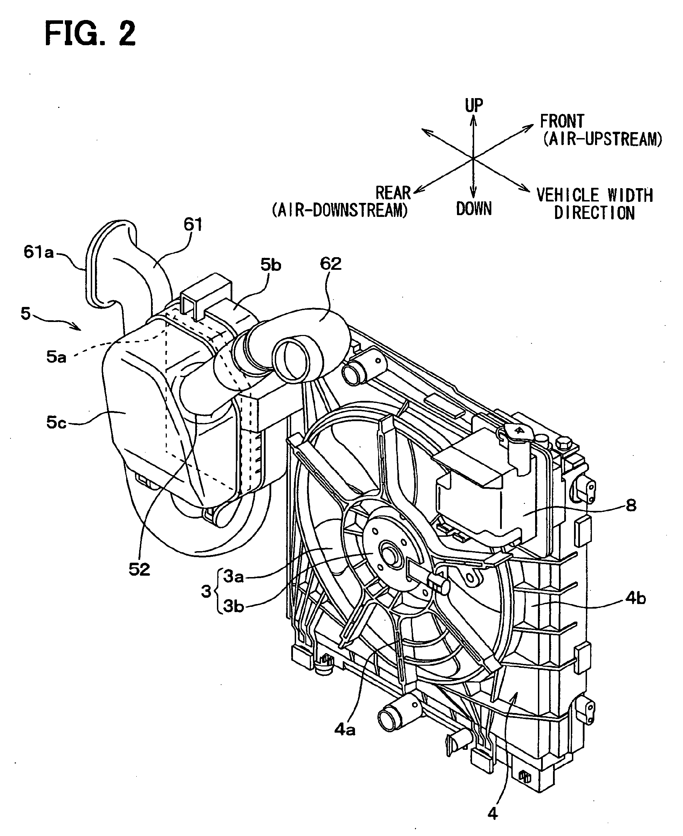

A first embodiment of the present invention will now be described with reference to Figs. 1 to 5. In the present embodiment, a cooling module is mounted in an engine compartment provided at a front end of a vehicle.

Referring to Figs. 1 to 3, the cooling module generally includes a radiator 1, a condenser 2, an electric fan unit (blower) 3, a fan shroud 4 and an air cleaner unit 5. The radiator 1 is a heat exchanger that performs heat exchange between a cooling fluid of an internal combustion engine (hereinafter, engine) and outside air introduced from an outside of a vehicle, thereby cooling the cooling fluid. The condenser 2 is a heat exchanger that performs heat exchange between a refrigerant of a refrigerant cycle of a vehicular air conditioner (not shown) and the outside air, thereby cooling the refrigerant.

The blower 3 is disposed to introduce the outside air to the radiator 1 and the condenser 2 for cooling the radiator 1 and the condenser 2. The fan shroud 4 is configured to support the blower 3 and form an air passage from the radiator 1 and the condenser 2 to the blower 3. That is, the fan shroud 4 is configured to guide the air to pass through the radiator 1 and the condenser 2 with an operation of the blower 3. The air cleaner unit 5 is provided to filter air to be introduced into the engine. Hereinafter, the radiator 1 and the condenser 2 are also referred to as the heat exchangers. The air to be introduced into the engine through the air cleaner unit 5 is also referred to as intake air. The cooling fluid and the refrigerant correspond to heat mediums.

The condenser 2 is disposed in front of the radiator 1 with respect to a vehicle front and rear direction. In other words, the condenser 2 is disposed upstream of the radiator 1 with respect to a flow direction of the air, which generally flows in a vehicle rearward direction. The blower 3 is disposed on a rear side of the radiator 1 with respect to the vehicle front and rear direction. In other words, the blower 3 is disposed downstream of the radiator 1 with respect to the air flow direction.

The air cleaner unit 5 is offset from the heat exchangers 1, 2 with respect to a horizontal direction, such as in a vehicle width direction that is perpendicular to the vehicle front and rear direction. That is, the condenser 2 and a front end of the air cleaner unit 5 are next to each other with respect to the vehicle width direction when viewed from a front side of the vehicle.

The blower 3 includes a fan 3a for generating the flow of air and an electric motor 3b for driving the fan 3a. The fan shroud 4 is made of a resin, such as polypropylene containing glass fiber. The fan shroud 4 has stays 4a for supporting the fan 3a and an air introducing portion 4b that forms the air passage from the heat exchangers 1, 2 to the fan 3a. The air introducing portion 4b is located upstream of the stays 4a, that is, upstream of a position where the fan 3a is supported, with respect to the air flow.

The air cleaner unit 5 includes an air cleaner element 5a for removing foreign materials from the intake air, an air cleaner case 5b for housing the air cleaner element 5a, and an air cleaner cap 5c. The air cleaner element 5a is disposed between the air cleaner case 5b and the air cleaner cap 5c.

The air cleaner case 5b is made of the same material as the fan shroud 4. That is, the air cleaner case 5b is made of a resin material, such as polypropylene containing glass fiber. The air cleaner case 5b is a container having a generally rectangular parallelepiped shape and defining an opening on one side. The air cleaner element 5a is inserted and fixed to a frame member disposed on a perimeter of the opening of the air cleaner case 5b. The air cleaner case 5b further has an air inlet 51 on another side for introducing the intake air into the air cleaner unit 5. An end of a tubular inlet duct 61 is coupled to the air inlet 51. The other end of the inlet duct 61 forms an air suction port 61 a through which the intake air is suctioned into the air cleaner unit 5.

The air cleaner unit 5 is disposed such that a front end wall 5d of the air cleaner case 5b is offset from the heat exchangers 1, 2 with respect to the horizontal direction, when viewed from the front side of the vehicle. Thus, the front end wall 5d of the air cleaner case 5b is exposed to air that is before passing through the heat exchangers 1, 2.

The air cleaner cap 5c is made of the same material as the air cleaner case 5b. That is, the air cleaner cap 5c is made of a resin material, such as polypropylene containing glass fiber. The air cleaner cap 5c is a container having a generally rectangular parallelepiped shape and defining an opening on one side. The air cleaner cap 5c has an engagement structure on the perimeter of the opening. The air cleaner cap 5c is coupled to the air cleaner case 5b such that the openings thereof are opposed to each other through air cleaner element 5a. The engagement structure of the air cleaner cap 5c is engaged with the side of the air cleaner case 5b on which the opening is provided through the air cleaner element 5a.

The air cleaner cap 5c has an air outlet 52 on another side for discharging the intake air, which has been filtered through the air cleaner element 5a, from the air cleaner unit 5. An end of a tubular outlet duct 62 is coupled to the air outlet 52. The other end of the outlet duct 62 is in communication with an intake manifold (not shown), which distributes the intake air into engine cylinders.

The air cleaner element 5a is constructed of a filtering member made of synthetic unwoven fiber, filter paper, or the like. The air cleaner element 5a is disposed substantially parallel to a plane that is perpendicular to the vehicle front and rear direction, that is, the air flow direction. In other words, the air cleaner case 5b and the air cleaner cap 5c are coupled with respect to the vehicle front and rear direction through the air cleaner element 5a. For example, the air cleaner case 5b is located upstream of the air cleaner cap 5c with respect to the air flow direction.

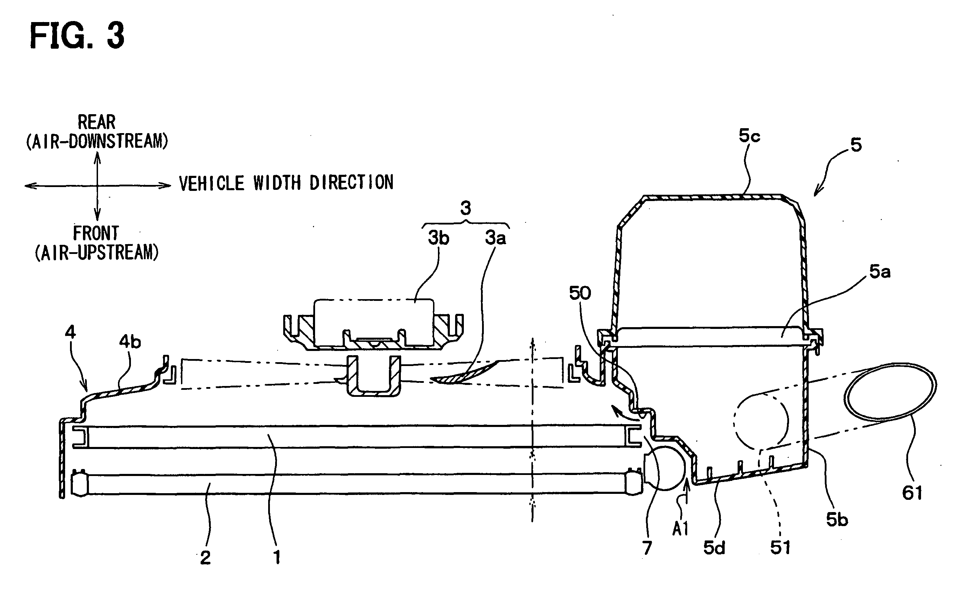

As shown in Fig. 3, the air cleaner case 5b is integrally formed with the fan shroud 4. The air cleaner case 5b has an outer wall (side wall) 50 on its upstream side. A part of the outer wall 50, which is on a side adjacent to the heat exchangers 1, 2 and opposed to the heat exchangers 1, 2, forms a part of the air introducing portion 4b of the fan shroud 4. That is, the outer wall 50 partly forms the air introducing portion 4b on a side facing the heat exchangers 1, 2.

Further, a clearance 7 is provided between the part of the outer wall 50, which forms the air introducing portion 4b, and the heat exchangers 1, 2 such that the air in front of the heat exchangers 1, 2 is partly introduced in the clearance 7 in a vehicle rearward direction in accordance with negative pressure generated by the blower 3, as shown by an arrow A1 in Fig. 3. As such, in the clearance 7, the air flows along the part of the outer wall 50 in the vehicle rearward direction, while bypassing the heat exchangers 1, 2.

The cooling module further has a reserve tank 8 for absorbing a change of volume of the cooling fluid passing through a cooling fluid circuit. The reserve tank 8 is made of a resin, and is fixed on a wall of the fan shroud 4, the wall facing a downstream position with respect to the air flow direction. Further, the reserve tank 8 is located at a position opposite to the air cleaner unit 5 with respect to the heat exchangers 1, 2.

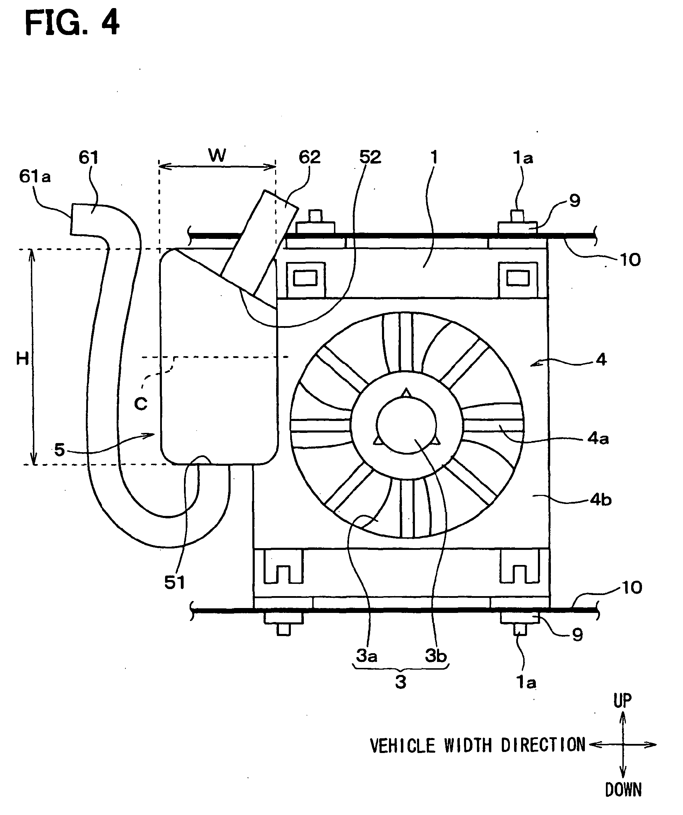

Fig. 4 shows a rear view of the cooling module when viewed from the rear side of the vehicle, that is, from a downstream position with respect to the air flow direction, in a condition mounted to the vehicle. In Fig. 4, illustration of the reserve tank 8 is omitted.

As shown in Fig. 4, the air cleaner unit 5 has length H with respect to the vehicle up and down direction and width W with respect to the vehicle width direction. The length H is greater than the width W. That is, a ratio of the length H to the width W is equal to or greater than one (H/W ≥ 1). Here, the length H is measured at a position where the height is the maximum in the air cleaner unit 5. Likewise, the width W is measured a position where the width is the maximum in the air cleaner unit 5. That is, the length H corresponds to a maximum length of the air cleaner unit 5 with respect to the vehicle up and down direction, and the width W corresponds to a maximum length of the air cleaner unit 5 with respect to the vehicle width direction.

The air inlet 51 is located at a position lower than a middle height (middle portion) of the air cleaner unit 5 (e.g., air cleaner case 5b), shown by a dotted line C in Fig. 4, with respect to the vehicle up and down direction. On the other hand, the air outlet 52 is located at a position higher than the middle height (middle portion) of the air cleaner (e.g., air cleaner cap 5c), with respect to the vehicle up and down direction.

In the present embodiment, the fan shroud 4 is fixed to the radiator 1. The radiator 1 on which the fan shroud 4 is fixed, is mounted to a vehicle body 10 through elastic members, such as elastically deformable rubber bushings 9. The radiator 1 has pins 1 a on its upper and lower ends. For example, the rubber bushings 9 are fixed to the pins 1 a beforehand, and the pins 1 a are engaged with portions of the vehicle body 10. As such, the radiator 1 on which the fan shroud 4 is fixed, that is, the cooling module is mounted to the vehicle. The condenser 2 can be assembled to the radiator 1 beforehand into the cooling module. Alternatively, the condenser 2 can be independently and directly fixed to the vehicle body 10.

The fan shroud 4 and the air cleaner case 5b are integrally formed by injection molding. After the fan shroud 4 and the air cleaner case 5b are molded in a cavity provided between two moulds, one of the moulds is moved in a direction that is parallel to a direction corresponding to the vehicle front and rear direction. Thus, the integrally molded fan shroud 4 and air cleaner case 5b is removed from the moulds.

As described in the above, the air cleaner case 5b and the fan shroud 4 are integrally formed with each other such that the part of the outer wall 50 forms the part of the air introducing portion 4b of the fan shroud 4. That is, the part of the air cleaner case 5b serves as the air introducing portion 4b. In other words, the air cleaner case 5b and the fan shroud 4 share a wall between them. Therefore, the fan shroud 4 becomes compact, and hence the weight of the cooling module is reduced.

The air cleaner unit 5 and the heat exchangers 1, 2 are arranged next to each other with respect to the vehicle width direction. Therefore, in a condition where the cooling module is mounted in the engine compartment, a space above the cooling module is increased. The space can be effectively used as the free space for a pedestrian protection system. Accordingly, pedestrian protection performance is improved by the structure of the cooling module, and the weight of the cooling module is reduced.

Since the air cleaner case 5b and the fan shroud 4 are integrally formed with each other such that the wall 50 of the air cleaner case 5b serves as the part of the air introducing portion 4b of the fan shroud 4, an area of the integrated air cleaner case 5b and fan shroud 4, when projected in a direction parallel to the vehicle front and rear direction, is reduced. Thus, a size of an injection molding apparatus can be reduced.

In addition, the front end wall 5d of the air cleaner unit 5 is located without overlapping with the heat exchangers 1, 2 when viewed from the front side. Therefore, the air that has not passed through the heat exchangers 1, 2 can be supplied toward the air cleaner unit 5. Because the air cleaner unit 5 is cooled by the air that has not passed through the heat exchangers 1, 2, an increase in temperature of the intake air is suppressed. Accordingly, engine torque is increased.

The fan shroud 4 and the air cleaner case 5b are configured such that the air in front of the heat exchangers 1, 2 is conducted toward a downstream position of the heat exchangers 1, 2 through the clearance 7 provided between the part of the wall 50 and the heat exchangers 1, 2. Thus, the air cleaner unit 5 is effectively cooled by the air passing through the clearance 7. As such, the increase in temperature of the intake air is effectively restricted, and hence the engine torque is further increased.

The air cleaner element 5a is disposed substantially parallel to the plane that is perpendicular to the air flow direction. Therefore, the air cleaner case 5b has the opening in a direction coincide with the direction in which the moulds are opened. Accordingly, the fan shroud 4 and the air cleaner case 5b are easily integrally formed with each other without requiring a specific sliding mould. Further, the moulds for molding the fan shroud 4 and the air cleaner case 5b are reduced in costs, and hence capital-investment spending is reduced. Accordingly, an increase in manufacturing cost of the fan shroud 4 with which the air cleaner case 5b is integrated is suppressed.

In general, nothing is disposed under an air cleaner unit in an engine compartment. That is, a space under the air cleaner in the engine compartment is a dead space. In the present embodiment, on the other hand, since the height H of the air cleaner unit 5 is greater than the width W, the space under the air cleaner unit 5 is reduced. That is, the air cleaner unit 5 is arranged while effectively using the space in the engine compartment.

In a case where the width W is greater than the length H in the air cleaner unit 5, a distance between the fan shroud 4 and the furthest portion of the air cleaner unit 5 is large, the furthest portion being furthest from the fan shroud 4 in the air cleaner unit 5. In the air cleaner unit 5 of the present embodiment, on the other hand, since the height H is greater than the width W, the distance between the fan shroud 4 and the furthest portion of the air cleaner unit 5 is reduced, as compared with the air cleaner unit in which the width W is greater than the height H. As such, strength of the air cleaner unit 5 is improved.

In general, the intake manifold is located above the engine. In the present embodiment, since the air outlet 52 is located higher than the middle position of the air cleaner unit 5 with respect to the vehicle up and down direction, handling and arrangement of the outlet duct 62 are eased. Also, since the air inlet 51 is located lower than the middle position of the air cleaner unit 5 with respect to the vehicle up and down direction, the flow of the intake air inside of the air cleaner unit 5 is facilitated. Accordingly, pressure loss is reduced.

Since the air cleaner unit 5 is in communication with the engine through the outlet duct 62, vibration of the engine is transmitted to the air cleaner unit 5. Therefore, if a fan shroud with which an air cleaner unit is integrated is directly fixed to a vehicle body, the vibration of the engine is transmitted to the fan shroud and the vehicle body through the air cleaner unit. In the present embodiment, on the other hand, the fan shroud 4 is fixed to the vehicle body 10 through the rubber bushings 9, which are elastically deformable. Because the vibration of the engine is absorbed by the rubber bushings 9, it is leas likely that the vibration will be transmitted to the vehicle body 10.

When the intake air is suctioned from the air suction port 61 a, suction noise will be generated. If the suction noise is transmitted into a passenger compartment, a passenger will feel unpleasant.

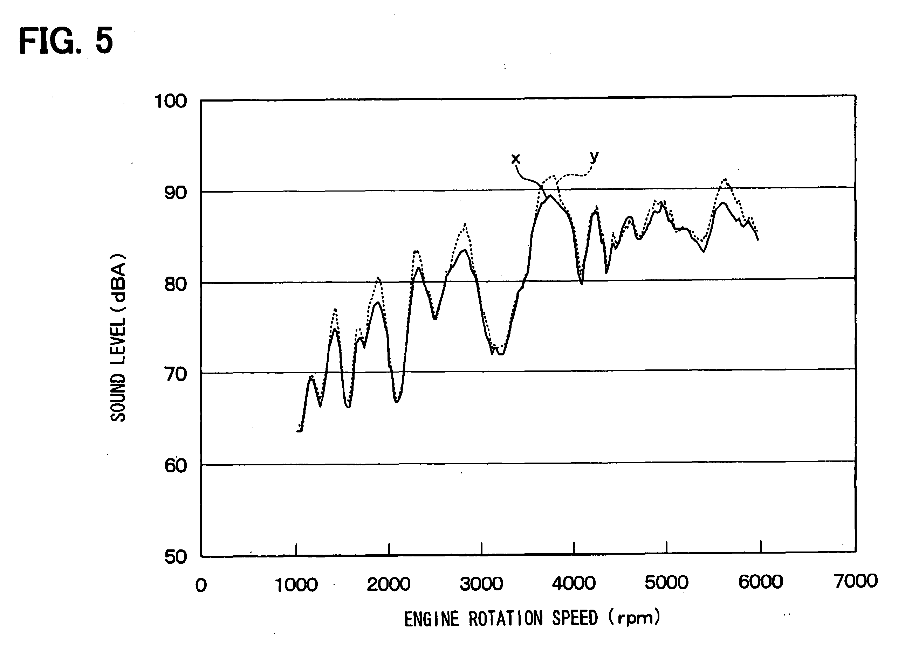

Fig. 5 shows a relationship between engine rotational speed of the vehicle and a sound level of the suction noise. In Fig. 5, a solid line x represents a measured result in a case where the cooling module of the present embodiment, in which the air cleaner unit 5 is integrated with the fan shroud 4, is mounted on a vehicle. Also, a dashed line y represents a measured result in a case where a cooling module as a comparative example, in which the air cleaner unit 5 is not integrated with the fan shroud 4, is mounted on a vehicle.

In the case where the air cleaner unit 5 is integrated with the fan shroud 4, the mass of parts connected to the inlet duct 61 is increased, as compared with the case where the air cleaner unit 5 is solely provided. Therefore, as shown in Fig. 5, the peaks of the sound level are lowered by integrating the air cleaner unit 5 with the fan shroud 4. As such, unpleasant feeling of the passenger will be reduced.

The fan shroud 4 is provided with the reserve tank 8, and the reserve tank 8 is arranged opposite to the air cleaner unit 5 with respect to the heat exchangers 1, 2. Therefore, balance of the weight of the fan shroud 4 with respect to the vehicle width direction is improved.

### (Second embodiment)

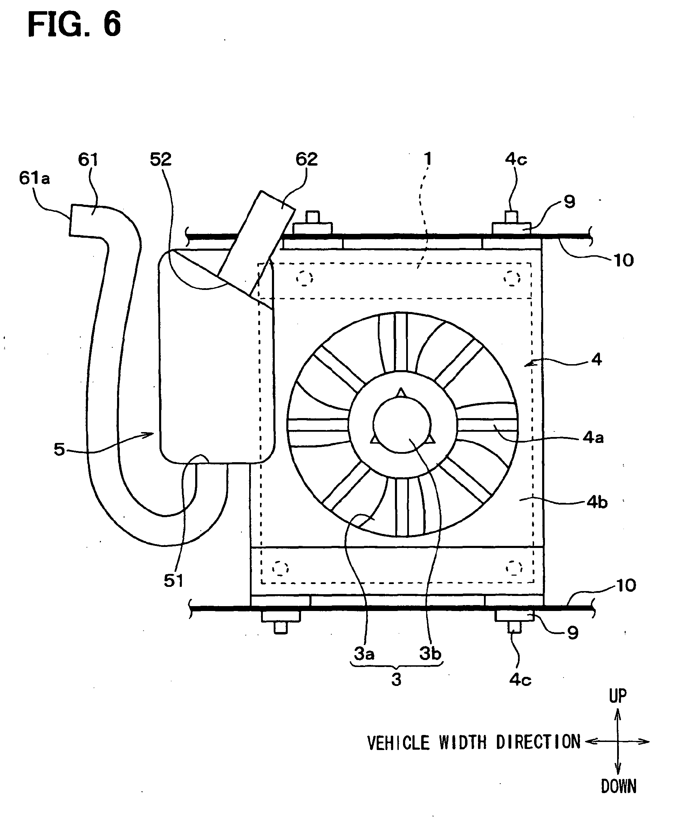

A second embodiment of the present invention will now be described with reference to Fig. 6. Hereinafter, like components are denoted by like reference characters and a description thereof is not repeated. In Fig. 6, the illustration of the reserve tank 8 is omitted.

In the present embodiment, as shown in Fig. 6, the radiator 1 is fixed to the fan shroud 4. The fan shroud 4 to which the radiator 1 is fixed is mounted to the vehicle body 10 through the elastic rubber bushings 9. For example, the fan shroud 4 has pins 4c on its upper and lower ends. The rubber bushings 9 are fixed to the pines 4c beforehand. The pins 4c are engaged with portions of the vehicle body 10. Thus, the fan shroud 4 to which the radiator 1 is fixed, that is, the cooling module is mounted to the vehicle. In this case, the condenser 2 can be fixed to the radiator 1 beforehand. Alternatively, the condenser 2 can be independently and directly fixed to the vehicle body 10. Also in the present embodiment, the similar effects as the first embodiment will be provided.

### (Other embodiments)

In the above embodiments, the air cleaner case 5b is integrated with the fan shroud 4. Alternatively, the air cleaner cap 5c can be integrated with the fan shroud 4.

In the above embodiments, the air cleaner case 5b has the air inlet 51, and the air cleaner cap 5c has the air outlet 52. Alternatively, the air cleaner case 5b can have the air outlet 52 and the air cleaner cap 5c can have the air inlet 51.

Additional advantages and modifications will readily occur to those skilled in the art. The invention in its broader term is therefore not limited to the specific details, representative apparatus, and illustrative examples shown and described.

## Claims

1. A cooling module to be mounted to a front part of a vehicle, the cooling module comprising:
a heat exchanger (1, 2) for performing heat exchange between air and a heat medium;
a fan shroud (4) disposed downstream of the heat exchanger (1, 2) with respect to a flow of air passing through the heat exchanger (1, 2);
a blower (3) held by the fan shroud (4); the fan shroud (4) includes an air introducing portion (4b) defining an air passage from the heat exchanger (1, 2) to the blower (3), and
an air cleaner unit (5) for filtering air to be introduced into an internal combustion engine of the vehicle, **characterized in that**
the air cleaner unit (5) is disposed such that a front end of the air cleaner unit (5) is offset from the heat exchanger (1, 2) with respect to a horizontal direction,
the air cleaner unit (5) has a side wall (50), and a part of the side wall (50) forms a part of the air introducing portion of the fan shroud (4) and is integrally formed therewith, and
a clearance (7) is provided between the part of the side wall (50) and the heat exchanger (1, 2) such that air upstream of the heat exchanger (1, 2) is conducted toward a position downstream of the heat exchanger (1, 2) through the clearance (7).

2. The cooling module according to claim 1, wherein
the air cleaner unit (5) includes an air cleaner case (5b), an air cleaner cap (5c), and an air cleaner element (5a) for filtering the air to be introduced into the internal combustion engine,
the air cleaner element (5a) is disposed between the air cleaner case (5a) and the air cleaner cap (5b) and arranged substantially parallel to a plane that is perpendicular to the flow of air passing through the heat exchanger (1, 2), and
one of the air cleaner case (5b) and the air cleaner cap (5c) is integrally formed with the fan shroud (4) and the side wall (50) is provided by the one.

3. The cooling module according to claim 1 or 2, wherein
the air cleaner unit (5) has a length (H) with respect to an up and down direction and a width (W) with respect to the horizontal direction, and the length (H) is greater than the width (W).

4. The cooling module according to any one of claims 1 to 3, wherein
the air cleaner unit (5) has an air inlet (51) for introducing air into the air cleaner unit (5) and an air outlet (52) for discharging the air from the air cleaner unit (5) after being filtered,
the air inlet (51) is located at a position lower than a middle position of the air cleaner unit (5) with respect to an up and down direction, and
the air outlet (52) is located at a position higher than the middle position with respect to the up and down direction.

5. The cooling module according to any one of claims 1 to 4, further comprising:
an elastic member (9) having elasticity, wherein
the fan shroud (4) is fixed to a body (10) of the vehicle through the elastic member (9).

6. The cooling module according to any one of claims 1 to 4, further comprising:
an elastic member (9) having elasticity, wherein
the fan shroud (4) is fixed to the heat exchanger (1, 2), and the heat exchanger (1, 2) is fixed to a body (10) of the vehicle through the elastic member (9).

## Patentansprüche

1. Kühlmodul zum Anbringen an einem vorderen Teil eines Fahrzeugs, umfassend:
einen Wärmetauscher (1, 2) zum Ausführen eines Wärmetausches zwischen der Luft und einem Wärmemedium;
eine Lüfterabdeckhaube (4), die in Bezug auf einen Luftstrom, der durch den Wärmetauscher (1, 2) hindurch tritt, stromabwärts des Wärmetauschers (1, 2) angeordnet ist;
ein Gebläse (3), das mittels der Lüfterabdeckhaube (4) gehalten wird, wobei die Lüfterabdeckhaube (4) einen Abschnitt (4b) für die Einführung von Luft aufweist, der einen Luftdurchtritt von dem Wärmetauscher (1, 2) hin zu dem Gebläse (3) begrenzt; und
eine Luftreinigungseinheit (5) zum Filtern der Luft, die in einen Verbrennungsmotor des Fahrzeugs eingeführt werden soll;
**dadurch gekennzeichnet, dass**
die Luftreinigungseinheit (5) so angeordnet ist, dass ein vorderes Ende der Luftreinigungseinheit (5) in Bezug auf den Wärmetauscher (1, 2) hinsichtlich einer horizontalen Richtung versetzt angeordnet ist,
die Luftreinigungseinheit (5) eine Seitenwand (50) aufweist, wobei ein Teil der Seitenwand (50) einen Teil des Abschnitts der Lüfterabdeckhaube (4) für die Einführung von Luft bildet und einstückig mit ihm ausgebildet ist; und
ein Zwischenraum (7) zwischen dem Teil der Seitenwand (50) und dem Wärmetauscher (1,2) vorgesehen ist, so dass die Luft, die sich stromaufwärts des Wärmetauschers (1, 2) befindet, in Richtung auf eine Position stromabwärts des Wärmetauschers (1, 2) durch den Zwischenraum (7) hindurch geführt wird.

2. Kühlmodul nach Anspruch 1, wobei
die Luftreinigungseinheit (5) ein Luftreinigungsgehäuse (5b), eine Luftreinigungskappe (5c) und ein Luftreinigungselement (5a) zum Filtern der Luft umfasst, die in den Verbrennungsmotor eingeführt werden soll,
das Luftreinigungselement (5a) zwischen dem Luftreinigungsgehäuse (5b) und der Luftreinigungskappe (5c) und im Wesentlichen parallel mit einer Ebene angeordnet ist, die sich rechtwinklig zu dem Luftstrom erstreckt, der durch den Wärmetauscher (1, 2) hindurch tritt, und
entweder das Luftreinigungsgehäuse (5b) oder die Luftreinigungskappe (5c) einstückig mit der Lüfterabdeckhaube (4) ausgebildet ist und die Seitenwand (50) aufweist.

3. Kühlmodul nach Anspruch 1 oder 2, wobei
die Luftreinigungseinheit (5) in Bezug auf eine Aufwärts-/Abwärtsrichtung eine Länge (H) und in Bezug auf die horizontale Richtung eine Breite (W) aufweist, und die Länge (H) größer als die Breite (W) ist.

4. Kühlmodul nach einem der Ansprüche 1 bis 3, wobei
die Luftreinigungseinheit (5) einen Lufteinlass (51) zum Einführen von Luft in die Luftreinigungseinheit (5) und einen Luftauslass (52) zum Abführen von Luft von der Luftreinigungseinheit (5) aufweist, nachdem sie gefiltert wurde,
in Bezug auf eine Aufwärts-/Abwärtsrichtung der Lufteinlass (51) an einer tieferen Stelle als eine mittlere Stelle der Luftreinigungseinheit (5) angeordnet ist, und
in Bezug auf die Aufwärts-/Abwärtsrichtung der Luftauslass (52) an einer höheren Stelle als die mittlere Stelle angeordnet ist.

5. Kühlmodul nach einem der Ansprüche 1 bis 4, weiter umfassend
ein elastisches Element (9), das Spannkraft aufweist, wobei
die Lüfterabdeckhaube (4) durch das elastische Element (9) an einem Körper (10) des Fahrzeugs befestigt ist.

6. Kühlmodul nach einem der Ansprüche 1 bis 4, weiter umfassend
ein elastisches Element (9), das Spannkraft aufweist, wobei
die Lüfterabdeckhaube (4) an dem Wärmetauscher (1, 2) befestigt ist, und der Wärmetauscher (1, 2) durch das elastische Element (9) an einem Körper (10) des Fahrzeugs befestigt ist.

## Revendications

1. Module de refroidissement à monter sur une partie avant d'un véhicule, le module de refroidissement comprenant :
un échangeur de chaleur (1, 2) pour réaliser un échange thermique entre l'air et un milieu thermique ;
un déflecteur (4) de ventilateur disposé en aval de l'échangeur de chaleur (1, 2) par rapport à un flux d'air passant à travers l'échangeur de chaleur (1, 2) ;
un souffleur (3) maintenu par le déflecteur (4) de ventilateur; le déflecteur (4) de ventilateur comporte une partie (4b) d'introduction d'air définissant un passage d'air de l'échangeur de chaleur (1, 2) au souffleur (3), et
une unité (5) de filtre à air destinée à filtrer l'air à introduire dans un moteur à combustion interne du véhicule,
**caractérisé en ce que**
l'unité (5) de filtre à air est disposée de sorte qu'une extrémité avant de l'unité (5) de filtre à air soit décalée par rapport à l'échangeur de chaleur (1, 2) selon une direction horizontale,
l'unité (5) de filtre à air possède une paroi latérale (50), et une partie de la paroi latérale (50) forme une partie de la partie d'introduction d'air du déflecteur (4) de ventilateur et est intégralement formée avec cette dernière, et
un espace (7) est prévu entre la partie de la paroi latérale (50) et l'échangeur de chaleur (1, 2) de sorte que l'air en amont de l'échangeur de chaleur (1, 2) soit conduit vers une position en aval de l'échangeur de chaleur (1, 2) à travers l'espace (7).

2. Module de refroidissement selon la revendication 1, dans lequel
l'unité (5) de filtre à air comporte un boîtier (5b) de filtre à air, un couvercle (5c) de filtre à air, et un élément (5a) de filtre à air pour filtrer l'air à introduire dans le moteur à combustion interne,
l'élément (5a) de filtre à air est disposé entre le boîtier (5a) de filtre à air et le couvercle (5b) de filtre à air et agencé essentiellement en parallèle avec un plan qui est perpendiculaire au flux d'air passant à travers l'échangeur de chaleur (1, 2), et
l'un du boîtier (5b) de filtre à air et du couvercle (5c) de filtre à air est intégralement formé avec le déflecteur (4) de ventilateur et la paroi latérale (50) est pourvue par l'autre.

3. Module de refroidissement selon la revendication 1 ou 2, dans lequel
l'unité (5) de filtre à air a une longueur (H) par rapport à une direction vers le haut et vers le bas et une largeur (W) par rapport à la direction horizontale, et la longueur (H) est supérieure à la largeur (W).

4. Module de refroidissement selon l'une quelconque des revendications 1 à 3, dans lequel
l'unité (5) de filtre à air possède une entrée d'air (51) pour introduire l'air dans l'unité (5) de filtre à air et une sortie d'air (52) pour décharger l'air de l'unité (5) de filtre à air après avoir été filtré,
l'entrée d'air (51) est située à une position qui est plus basse qu'une position médiane de l'unité (5) de filtre à air par rapport à une direction vers le haut er vers le bas, et
la sortie d'air (52) est située à une position qui est plus élevée que la position médiane par rapport à la direction vers le haut et vers le bas.

5. Module de refroidissement selon l'une quelconque des revendications 1 à 4, comprenant en plus :
un élément élastique (9) ayant une élasticité, où
le déflecteur (4) de ventilateur est fixé à un corps (10) du véhicule à travers l'élément élastique (9).

6. Module de refroidissement selon l'une quelconque des revendications 1 à 4, comprenant en plus :
un élément élastique (9) ayant une élasticité, où
le déflecteur (4) de ventilateur est fixé à l'échangeur de chaleur (1, 2), et le premier échangeur de chaleur (1, 2) est fixé à un corps (10) du véhicule à travers l'élément élastique (9).
